# EUROPEAN PATENT APPLICATION

(11) **EP 4 201 794 A1**
(43) Date of publication of application: **28.06.2023**
(21) Application number: 22215425.4
(22) Date of filing: 21.12.2022
(51) Int. Cl.: B62H 1/02

(54) **DEVICE FOR FIXING A CYCLE STAY TO A LOW CHAINSTAY OF A BICYCLE**

(30) Priority: 22.12.2021 IT 202100032222
(71) Applicant: Ursus S.P.A., 36027 Rosa' VI (IT)
(72) Inventor: FERRONATO, Sergio, 36027 ROSA' (VI) (IT)
(74) Representative: Marchioro, Paolo

(57) **Abstract**

The invention concerns a device (10) for fixing a cycle stay to a low chainstay of a bicycle, comprising
- a cycle stay (11) comprising a fixing bracket (12) and a support leg (13), said support leg (13) being pivoted to said fixing bracket (12);
- a low chainstay (14) of a bicycle,
wherein the fixing bracket (12) is fixed to the low chainstay (14) by means of two screws (15, 16), each screw comprising a screwing head (15a, 16a) and a threaded shank (15b, 16b), said screws (15, 16) being arranged substantially vertically with respect to a normal use arrangement of the bicycle of which said low chainstay (14) is part, said screws (15, 16) being arranged to cross each a corresponding through opening (18, 19) defined on said fixing bracket (12) and being screwed to a corresponding vertical threaded hole (20, 21) developing from the bottom upwards in said low chainstay (14), said screwing heads (15a, 15b) being arranged under said fixing bracket (12) and said threaded shanks (15b, 16b) being screwed to said threaded holes (20, 21) according to a direction running from the bottom upwards.

## Description

The invention concerns a device for fixing a cycle stay to a low chainstay of a bicycle.

Nowadays a cycle stay is generally made up of:
- a fixing bracket, configured to be fixed to a central or rear portion of the frame of a bicycle;
- a support leg articulated to the fixing bracket.

A cycle stay can therefore be:
- of the central type: fixed under the frame in a portion between the two wheels, to the lower chainstays of the frame, near the seat of the central movement;
- of the rear type: fixed to a low chainstay, usually near or at the rear wheel.

The term "rear" means on the opposite side to the normal forward direction of a bicycle.

The expression "low chainstays" indicates the two tubular elements of the frame, substantially horizontal, between which the rear wheel of the bicycle is interposed, whereas "high chainstays" indicates the two corresponding tubular elements of the frame, substantially oblique, between which the rear wheel is interposed, and which develop between the seat tube and the low chainstays. Each low chainstay is joined to the respective high chainstay by means of a corresponding "rear fork", normally welded to the converging ends of a low chainstay and of the corresponding high chainstay.

Nowadays the fixing of a cycle stay to the low chainstay of a bicycle is done by fixing the fixing bracket of the cycle stay either to the rear end section of the low chainstay, or to the rear fork.

The fixing bracket has a substantially vertical development, with respect to a normal use arrangement of the bicycle, and is fixed by means of threaded connections; such threaded connections usually envisage using two screws screwed laterally which cross the fixing bracket and are screwed either to the low chainstay or to the rear fork according to a horizontal direction, and from the outside towards the wheel.

This fixing system, although known and widespread, gives rise to a situation in which the fixing bracket protrudes laterally from the frame of the bike, causing an unfavourable encumbrance in aerodynamic terms and which is dangerous for a user who can rub against it with a calf.

Moreover, such a fixing system may be aesthetically unpleasant.

Furthermore, the fixing systems of known type envisage threaded connections comprising two screws and corresponding holes on the fixing bracket of the cycle stay.

These threaded connections do not provide for any possibility of adjusting any reciprocal incorrect positioning of the parts, and if the fixing bracket or the screwing holes are not made precisely, it is possible that the mounting of the cycle stay to the bicycle will be irreparably inaccurate.

The task of the present invention is to develop a device for fixing a cycle stay to a low chainstay of a bicycle, capable of obviating the aforementioned drawbacks and limitations of the known art.

In particular, an object of the invention is to develop a device capable of reducing the encumbrance generated by the cycle stay.

Another object of the invention is to develop a device that allows to set up a cycle stay in a less dangerous position for a user.

A further object of the invention is to develop a device that makes the bicycle more aerodynamic.

Still further, an object of the invention is to develop a device for fixing a cycle stay to a low chainstay of a bicycle that has a better aesthetic impact than what is known.

The aforementioned task as well as the aforementioned objects are achieved by a device for fixing a cycle stay to a low chainstay of a bicycle according to claim 1.

Further characteristics of the device according to claim 1 are described in the dependent claims.

The task and the aforementioned objects, together with the advantages that will be mentioned below, are highlighted by the description of two embodiments and five variants of the invention, which are given, by way of indication but not limitation, with reference to the attached drawing tables, where:
- Figure 1 represents a perspective view of a device according to the invention in a first embodiment thereof;
- Figure 2 represents an enlargement of a detail of Figure 1;
- Figure 3 represents a sectional side view of an exploded view of the device according to the invention of Figure 1;
- Figure 3a represents the same view as Figure 3 with the device fully assembled;
- Figure 4 represents a perspective view of a device according to the invention in a second embodiment thereof;
- Figure 4a represents the same view as Figure 4 with the device fully assembled;
- Figure 4b represents a cross-sectional view of the device of Figure 4a;
- Figure 5 represents a cross-section of the device of Figure 4;
- Figure 6 represents a top plan view of a first variant embodiment of a detail of the device according to the invention;
- Figure 7 represents a top plan view of a second variant embodiment of the detail of Figure 6;
- Figure 8 represents a top plan view of a third variant embodiment of the detail of Figure 6;
- Figure 9 represents a top plan view of a fourth variant embodiment of the detail of Figure 6;
- Figure 10 represents a top plan view of a fifth variant embodiment of the detail of Figure 6.

With reference to the cited Figures, a device for fixing a cycle stay to a low chainstay of a bicycle according to the invention is indicated, as a whole of a first embodiment, with the number **10.**

The device **10** comprises:
- a cycle stay **11** comprising in turn a fixing bracket **12** and a support leg **13,** said support leg **13** being pivoted to the fixing bracket **12;**
- a low chainstay **14** of a bicycle **B,** of which a wheel is schematically represented.

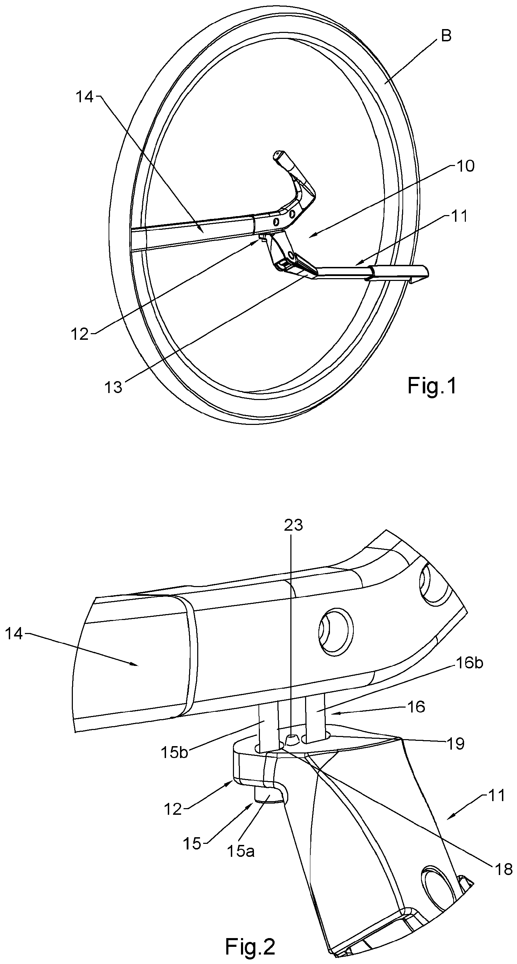

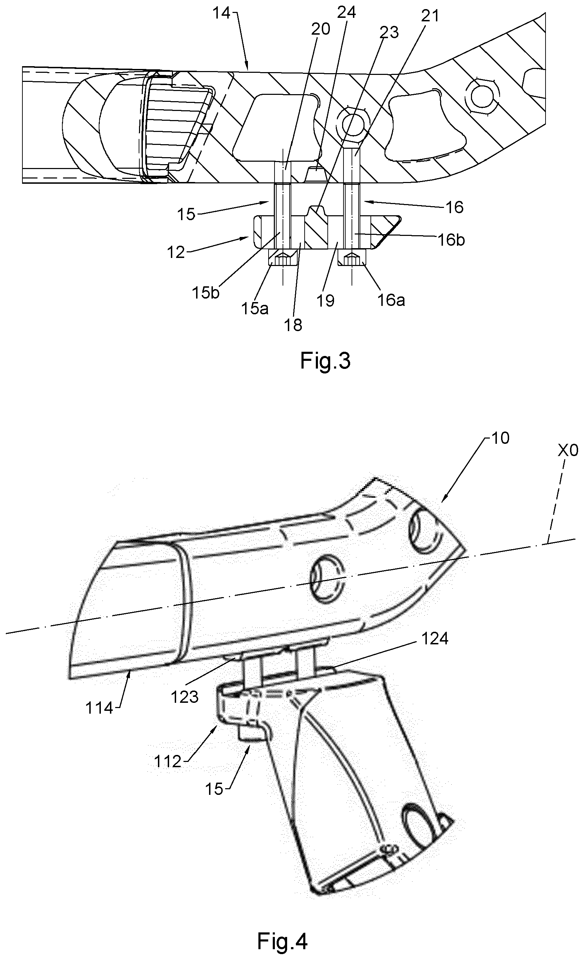

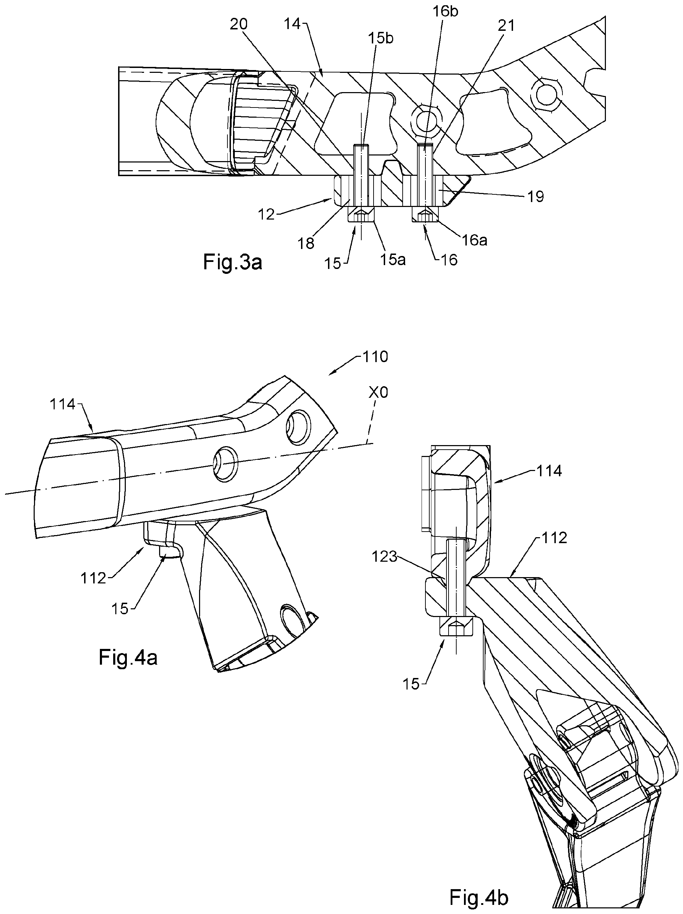

The peculiarity of the invention lies in the fact that said fixing bracket **12** is fixed to said low chainstay **14** by means of two screws **15** and **16,** each screw comprising a screwing head **15a** and **16a** and a threaded shank **15b** and **16b,** as can be seen in Figures 2, 3 and 3a.

The screws **15** and **16** are arranged substantially vertically with respect to a normal use arrangement of the bicycle of which said low chainstay **14** is part. As can be clearly seen in Figures 3 and 3a, the screws **15** and **16** are each arranged to cross a corresponding through opening **18** and **19** defined on the fixing bracket **12.**

The screws **15** and **16** are screwed to a corresponding vertical threaded hole **20** and **21** developing from the bottom upwards in the lower chainstay **14.**

The screwing heads **15a** and **15b** are arranged under said fixing bracket **12** and said threaded shanks **15b** and **16b** are screwed to the threaded holes **20** and **21** according to a direction running from the bottom upwards.

This technical solution makes it possible to realize a device **10** where the heads of the screws **15** and **16** and the fixing bracket **12** are practically hidden under the low chainstay **14** with an important limitation of the risks of impact and rubbing by a user.

In particular, the fixing bracket and the low chainstay have a stabilization relief configured to couple with a counter-shaped seat defined on the one or the other between said fixing bracket and said low chainstay.

For example, in Figures 2 and 3 the fixing bracket **12** has a stabilization relief **23** configured to couple with a counter-shaped seat **24** defined on said low chainstay **14.**

In such an example, the stabilization relief **23** consists of a frusto-conical appendage that develops from the fixing bracket **12** in a position between the two through openings **18** and **19.**

This coupling between the stabilization relief **23** and the seat **24** cooperates with the correct positioning of the fixing bracket **12** with respect to the low chainstay **14.**

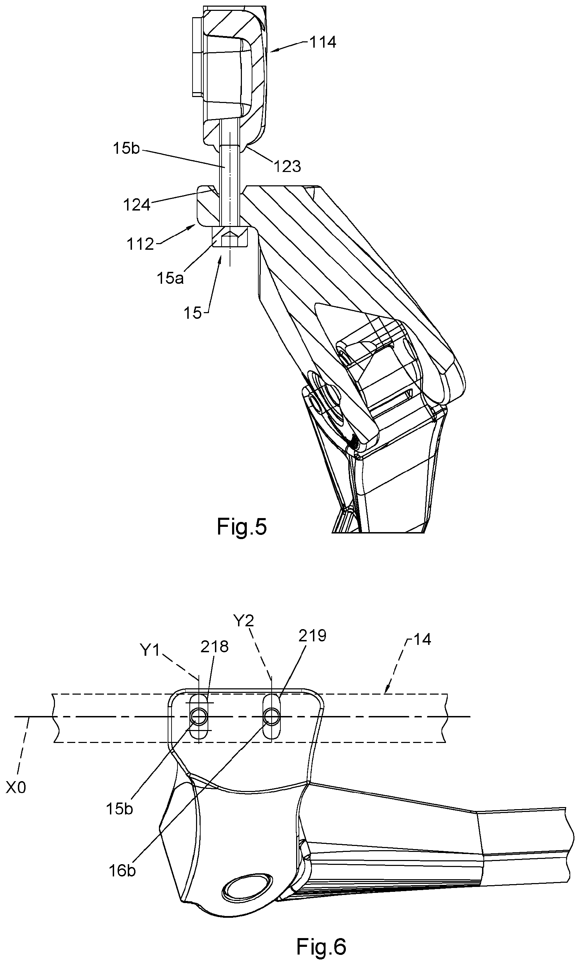

In a second embodiment of the invention, where the device is indicated as a whole with number **110,** and illustrated in Figures 4, 4a, 4b and 5, the low chainstay **114** has a stabilization relief **123** configured to couple with a counter-shaped seat **124** defined on said fixing bracket **112.**

In this embodiment, the stabilization relief **123** consists of a wedge-shaped appendage that develops over a length substantially corresponding to the length of the fixing bracket **112.**

The length of the fixing bracket **112** is to be understood as measured in an anterior-posterior development direction **X0** of the low chainstay **114,** schematized in Figure 4.

At least one of said through openings **18, 19, 218, 219, 318, 319, 418, 419** is slot-shaped.

Such a configuration of the through openings allows an optimal adjustment of the position of the fixing bracket **12** and **112** with respect to the low chainstay **14** and **114.**

For example, both said through openings **218, 219, 318, 319, 418, 419** are slot-shaped, like in the variant embodiments of the invention exemplified in Figures 6, 7 and 8.

In a first variant embodiment of Figure 6, the through openings **218** and **219** both develop according to a respective axis **Y1, Y2** transverse to an anterior-posterior development direction **X0** of said low chainstay **14.**

In particular, the transverse axes **Y1** and **Y2** are orthogonal to the anterior-posterior development direction **X0.**

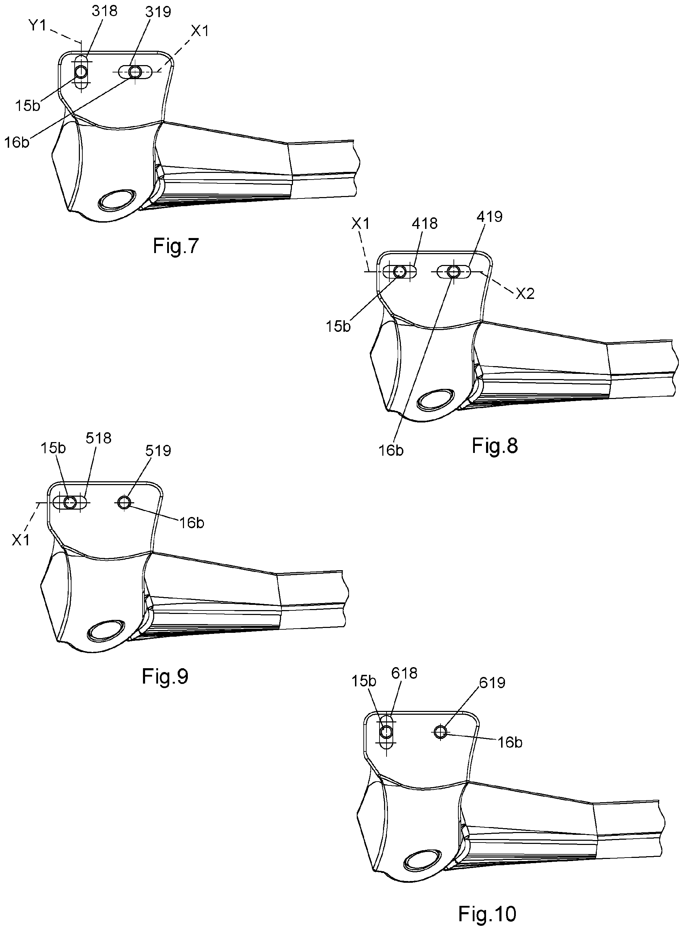

In a second variant embodiment of Figure 7, of the through openings **318** and **319** a first through opening **318** develops according to an axis Y1 transverse to an anterior-posterior development direction **X0** of said low chainstay **14** and **114,** whereas a second through opening **319** develops according to a development direction **X1** substantially parallel to said anterior-posterior development direction **X0.**

In this second variant embodiment, the transverse axis **Y1** is substantially orthogonal to the development direction **X1.**

In a third variant embodiment exemplified in Figure 8, the through openings **418** and **419** both develop according to a respective axis **X1** and **X2** substantially parallel to the anterior-posterior development direction **X0** of said low chainstay **14** and **114.**

In a fourth variant embodiment exemplified in Figure 9, one of said through openings **518** is configured as a slot, the other through opening **519** being defined by a hole.

In particular, in said fourth variant embodiment of the invention the first through opening **518** develops according to an axis **X1** substantially parallel to the anterior-posterior development direction **X0** of said low chainstay **14** and **114.** In a fifth variant embodiment exemplified in Figure 10, one of said through openings **618** is configured as a slot, the other through opening **619** being defined by a hole.

In particular, in said fifth variant embodiment of the invention the first through opening **618** develops according to an axis **Y1** transverse to the anterior-posterior development direction **X0** of said low chainstay **14** and **114.**

In the above-described first, second, third, fourth and fifth variant embodiments, the shapes of the through openings are intended to be reversible, i.e. the first through opening **218, 318, 418, 518, 618** is shaped as the second through opening **219, 319, 419, 519, 619,** and vice versa.

The above-described first, second, third, fourth and fifth variant embodiments are intended to be applicable to both the above-described first **10** and second **110** embodiments of the invention.

Thanks to this device **10** and **110** according to the invention, the cycle stay is attached to the lower chainstay of the bicycle by screwing it from the bottom upwards.

Thanks to the presence of a relief and a counter-shaped bas-relief, there is an important recovery of the coupling plays between the cycle stay and the low chainstay of the bicycle.

Thanks to the fact that at least one of the through openings is a slot, the device **10** and **110** allows easy and precise adjustment of the position of the fixing bracket of the cycle stay to the low chainstay.

It has in practice been established that the invention achieves the intended task and objects.

In particular, with the invention a device has been developed for fixing a cycle stay to a low chainstay of a bicycle, which is capable of obviating the aforementioned drawbacks and limitations of the known art.

In particular, with the invention a device has been developed which is capable of reducing the encumbrance generated by the cycle stay, thanks to the peculiar fixing of the bracket under the low chainstay, with also the heads of the screws that are under the bracket and therefore not visible when the bicycle is used.

In addition, with the invention a device has been developed that allows to set up a cycle stay in a less dangerous position for a user.

In addition, with the invention a device has been developed that makes the bicycle more aerodynamic.

Still, with the invention a device has been developed for fixing a cycle stay to a low chainstay of a bicycle that has a better aesthetic impact than what is known.

The invention thus conceived is susceptible of numerous modifications and variations, all of which are within the scope of the inventive concept; moreover, all the details may be replaced by other technically equivalent elements.

In practice, the components and materials used, as well as the dimensions and contingent shapes, provided they are compatible with the specific use, may be any depending on the needs and the state of the art.

Where the features and techniques mentioned in any claim are followed by reference marks, such reference marks are intended to be affixed solely for the purpose of increasing the intelligibility of the claims and, consequently, such reference marks have no limiting effect on the interpretation of each element identified by way of example by such reference marks.

## Claims

1. Device (10) for fixing a cycle stay to a low chainstay of a bicycle, comprising:
- a cycle stay (11) comprising a fixing bracket (12) and a support leg (13), said support leg (13) being pivoted to said fixing bracket (12);
- a low chainstay (14) of a bicycle,
**characterized in that** said fixing bracket (12) is fixed to said low chainstay (14) by means of two screws (15, 16), each screw comprising a screwing head (15a, 16a) and a threaded shank (15b, 16b), said screws (15, 16) being arranged substantially vertically with respect to a normal use arrangement of the bicycle of which said low chainstay (14) is part, said screws (15, 16) being arranged to cross each a corresponding through opening (18, 19) defined on said fixing bracket (12) and being screwed to a corresponding vertical threaded hole (20, 21) developing from the bottom upwards in said low chainstay (14), said screwing heads (15a, 15b) being arranged under said fixing bracket (12) and said threaded shanks (15b, 16b) being screwed to said threaded holes (20, 21) according to a direction running from the bottom upwards.

2. Device according to claim 1, **characterized in that** one of said fixing bracket (12, 112) and said low chainstay (14, 114) has a stabilization relief (23, 123) configured to couple with a counter-shaped seat (24, 124) defined on the one or the other between said fixing bracket (12, 112) and said low chainstay (14, 114).

3. Device according to claim 2, **characterized in that** said fixing bracket (12) has a stabilization relief (23) configured to couple with a counter-shaped seat (24) defined on said low chainstay (14).

4. Device according to claim 2, **characterized in that** said low chainstay (114) has a stabilization relief (123) configured to couple with a counter-shaped seat (124) defined on said fixing bracket (112).

5. Device according to one or more of the preceding claims, **characterized in that** at least one of said through openings (18, 19, 218, 219, 318, 319, 418, 419) is slot-shaped.

6. Device according to claim 5, **characterized in that** both said through openings (218, 219, 318, 319, 418, 419) are slot-shaped.

7. Device according to claim 6, **characterized in that** said through openings (218, 219) both develop according to a respective axis (Y1, Y2) transverse to an anterior-posterior development direction (X0) of said low chainstay (14).

8. Device according to claim 6, **characterized in that** of said through openings (318, 319) a first through opening (318) develops according to an axis (Y1) transverse to an anterior-posterior development direction (X0) of said low chainstay (14), while a second through opening (319) develops according to a development direction (X1) substantially parallel to said anterior-posterior development direction (X0).

9. Device according to claim 6, **characterized in that** said through openings (418, 419) both develop according to a respective axis (X1, X2) substantially parallel to an anterior-posterior development direction (X0) of said low chainstay (14).

10. Device according to claim 5, **characterized in that** one of said through openings (518, 618) is slot-shaped, the other through opening (519, 619) being defined by a hole.
